# EUROPEAN PATENT APPLICATION

(11) **EP 4 645 508 A1**
(43) Date of publication of application: **05.11.2025**
(21) Application number: 23911776.5
(22) Date of filing: 15.12.2023
(51) Int. Cl.: H01M 10/0587, H01M 50/536

(54) **CYLINDRICAL BATTERY**

(30) Priority: 27.12.2022 JP 2022210958
(71) Applicant: Panasonic Energy Co., Ltd., Moriguchi-shi, Osaka 570-8511 (JP)
(72) Inventor: TSUDA Takao, Kadoma-shi, Osaka 571-0057 (JP); ISHIGURO Tasuku, Kadoma-shi, Osaka 571-0057 (JP); SASA Tatsuro, Kadoma-shi, Osaka 571-0057 (JP); MATSUMOTO Katsumasa, Kadoma-shi, Osaka 571-0057 (JP); SHIMA Kaho, Kadoma-shi, Osaka 571-0057 (JP); ASADA Yuki, Kadoma-shi, Osaka 571-0057 (JP)
(74) Representative: Eisenführ Speiser
(86) International application number: PCT/JP2023/045012
(87) International publication number: WO 2024/142995

(57) **Abstract**

In a cylindrical battery as an example of an embodiment, a negative electrode (12) comprises: a non-opposing portion (43) that is wound 0.75 times or more on a winding-start side of an electrode assembly (14); and, at least in the non-opposing portion (43), a first maximal value (P1) and a second maximal portion (P2) in which the value of radius of curvature × radius is a local maximum. The first maximal portion (P1) is positioned in a range in which an angle (θ1) from a positive electrode start end (11x) toward a winding-end side with respect to a winding center (Z) of the electrode assembly (14) is between 180° and 280° inclusive. The second maximal portion (P2) is positioned in a range in which an angle (θ2) from the first maximal portion (P1) toward the winding-end side is 80°±5°.

## Description

### TECHNICAL FIELD

The present disclosure relates to a cylindrical battery.

### BACKGROUND ART

A cylindrical battery comprises a wound electrode assembly formed by spirally winding a positive electrode and a negative electrode with a separator interposed therebetween. A winding core of the electrode assembly typically has formed therein a cavity extending in the axial direction. Such a cavity functions as an exhaust passage for guiding a gas, which is generated when an abnormality occurs to the battery, toward a safety valve. For example, Patent Literature 1 discloses a cylindrical battery comprising a wound electrode assembly having, on the winding-start side of the electrode assembly, a non-opposing portion that has a negative electrode mixture layer formed on at least one surface of a negative electrode core, and is wound by a predetermined length or more without facing a positive electrode.

### CITATION LIST

### PATENT LITERATURE

PATENT LITERATURE 1: International Publication No. WO 2018/116876

### SUMMARY

According to the cylindrical battery of Patent Literature 1, the shape stability of the winding core portion improves, and an exhaust passage to be used upon occurrence of an abnormality is sufficiently secured. Meanwhile, when a change in the volume of the negative electrode during charging and discharging has increased to a large degree with an increase in the capacity of the battery, for example, deformation of the electrode assembly is likely to occur around the winding core even in the cylindrical battery of Patent Literature 1. When large deformation of the electrode assembly occurs at opposing portions of the positive electrode and the negative electrode, the distance between the positive and negative electrodes will change, with the result that unevenness of the charge-discharge reactions can occur, for example, which is problematic.

The cylindrical battery according to the present disclosure is a cylindrical battery, comprising an electrode assembly, the electrode assembly having a positive electrode, a negative electrode including a core and a mixture layer, and a separator, the electrode assembly being formed by winding the positive electrode and the negative electrode with the separator interposed between the positive electrode and the negative electrode, in which the negative electrode has, on a winding-start side of the electrode assembly, a non-opposing portion that has the mixture layer formed on at least one surface of the core, and is wound 0.75 turn or more without facing the positive electrode, the positive electrode has, in at least an innermost turn, first and second maximum portions each having a maximum value of a curvature × a radius, the first maximum portion is located in a range of an angle θ1 of greater than or equal to 180° and less than or equal to 280°, the angle θ1 being an angle from a positive electrode start end to a position in a direction of a winding-finish side with respect to a winding center of the electrode assembly, the second maximum portion is located in a range of an angle θ2 of 80°±5°, the angle θ2 being an angle from the first maximum portion to a position in the direction of the winding-finish side with respect to the winding center of the electrode assembly, and the value of the curvature × the radius is maximum at one of the first and second maximum portions, and is second maximum at another of the first and second maximum portions.

With the cylindrical battery according to the present disclosure, it is possible to suppress the deformation of the electrode assembly at the opposing portions of the positive electrode and the negative electrode.

### BRIEF DESCRIPTION OF DRAWING

FIG. 1 is a sectional view in the axial direction of a cylindrical battery as an example of an embodiment.
FIG. 2 is a view illustrating a partial cross-section in the radial direction of an electrode assembly as an example of an embodiment.
FIG. 3 is a graph illustrating, regarding a positive electrode of an electrode assembly as an example of an embodiment, the relationship between the angle from the position of the positive electrode start end to a position in the direction of the winding-finish side with respect to the winding center and the curvature × the radius of the positive electrode.
FIG. 4 is a view for describing a method for evaluating deformation of a plate.

### DESCRIPTION OF EMBODIMENTS

Hereinafter, an example of an embodiment of a cylindrical battery according to the present disclosure will be described in detail with reference to the drawings. Note that the cylindrical battery according to the present disclosure is not limited to the embodiment described below.

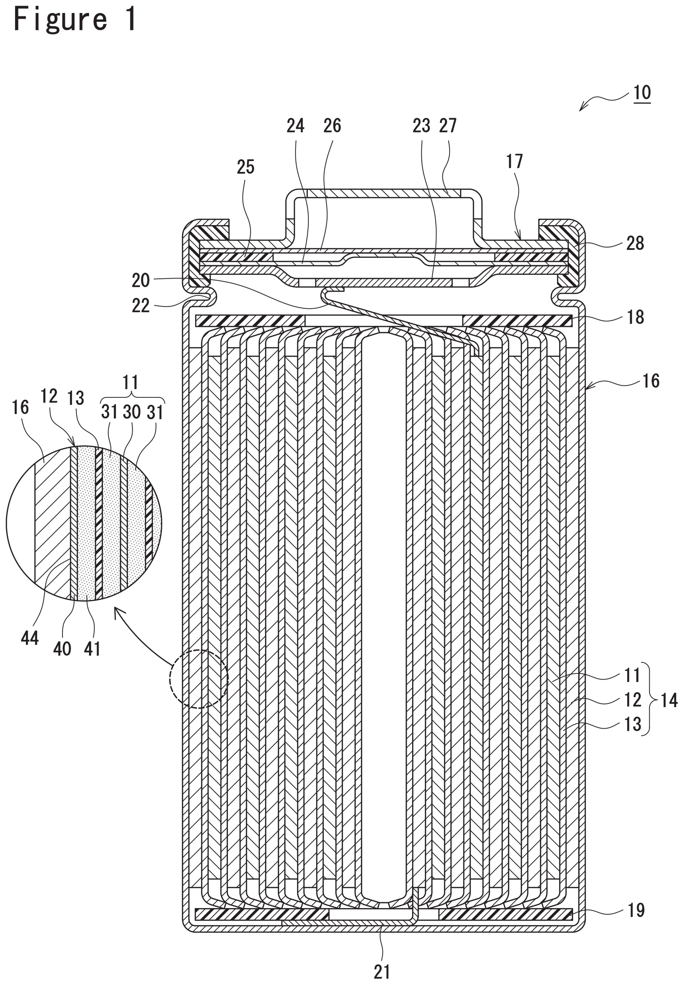

FIG. 1 is a sectional view of a cylindrical battery 10 as an example of an embodiment. As illustrated in FIG. 1, the cylindrical battery 10 comprises an electrode assembly 14 that has a positive electrode 11, a negative electrode 12, and a separator 13, and is formed by winding the positive electrode 11 and the negative electrode 12 with the separator 13 interposed therebetween. The cylindrical battery 10 also comprises a closed-bottomed cylindrical outer can 16 for housing the electrode assembly 14, and a sealing assembly 17 for closing an opening portion of the outer can 16. The outer can 16 houses an electrolyte together with the electrode assembly 14. The outer can 16 has a grooved portion 22 formed in its sidewall, and the sealing assembly 17 closes the opening portion of the outer can 16 while being supported on the grooved portion 22. Hereinafter, the sealing assembly 17 side of the cylindrical battery 10 shall be assumed as the upper side, while the bottom side of the outer can 16 shall be assumed as the lower side for the sake of convenience of description.

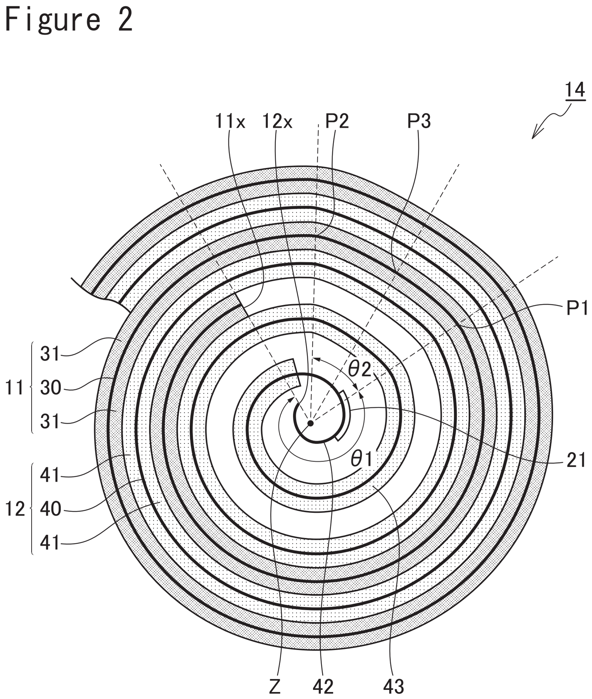

The details will be described later, but the negative electrode 12 has, on the winding-start side of the electrode assembly 14, a non-opposing portion 43 (see FIG. 2) that has a negative electrode mixture layer 41 formed on at least one surface of a negative electrode core 40, and is wound 0.75 turn or more without facing the positive electrode 11. The non-opposing portion 43 secures a winding core structure of the electrode assembly 14 with excellent shape stability, and the winding core has a cavity formed therein along the axial direction. The cavity of the winding core functions as an exhaust passage for guiding a gas, which is generated when an abnormality occurs to the battery, toward a safety valve. Setting the length of the non-opposing portion 43 to greater than or equal to 0.75 turn can stabilize the shape of the winding core, and can secure a sufficient cavity as an exhaust passage.

The electrolyte may be an aqueous electrolyte, but in the present embodiment, a non-aqueous electrolyte is used. The non-aqueous electrolyte has lithium ionic conductivity. The non-aqueous electrolyte may be either a liquid electrolyte (i.e., an electrolytic solution) or a solid electrolyte. The cylindrical battery 10 is a non-aqueous electrolyte secondary battery, for example, and is preferably a lithium-ion battery, in particular.

The liquid electrolyte (i.e., the electrolytic solution) contains a non-aqueous solvent and an electrolyte salt dissolved therein. As the non-aqueous solvent, esters, ethers, nitriles, amides, or a mixed solvent of two or more of them can be used, for example. Examples of the non-aqueous solvent include ethylene carbonate (EC), ethyl methyl carbonate (EMC), dimethyl carbonate (DMC), diethyl carbonate (DEC), and a mixed solvent thereof. The non-aqueous solvent may contain a halogen-substituted compound (e.g., fluoroethylene carbonate) obtained by substituting at least some of hydrogen atoms of such a solvent with halogen atoms, such as fluorine. As the electrolyte salt, a lithium salt, such as LiPF₆, is used, for example.

As the solid electrolyte, a solid or gel-like polymer electrolyte or an inorganic solid electrolyte can be used, for example. As the inorganic solid electrolyte, known materials for all-solid-state lithium-ion secondary batteries (e.g., an oxide-based solid electrolyte, a sulfide-based solid electrolyte, and a halogen-based solid electrolyte) can be used. The polymer electrolyte contains a lithium salt and a matrix polymer, or contains a non-aqueous solvent, a lithium salt, and a matrix polymer, for example. As the matrix polymer, a polymer material that turns into a gel by absorbing a non-aqueous solvent is used, for example. Examples of the polymer material include fluororesin, acrylic resin, and polyether resin.

As described above, the electrode assembly 14 has a wound structure obtained by spirally winding the positive electrode 11 and the negative electrode 12 with the separator 13 interposed therebetween. All of the positive electrode 11, the negative electrode 12, and the separator 13 are long, belt-like bodies, and are spirally wound so as to be alternately stacked in the radial direction of the electrode assembly 14. The negative electrode 12 is formed such that it has larger dimensions than the positive electrode 11 to prevent the deposition of lithium. That is, the negative electrode 12 is formed such that it is longer than the positive electrode 11 both in the longitudinal direction and the width direction. The separator 13 is formed such that it has larger dimensions than at least the positive electrode 11. For example, two separators 13 are arranged to sandwich the positive electrode 11 therebetween.

The electrode assembly 14 has a positive electrode lead 20 joined to the positive electrode 11, and a negative electrode lead 21 joined to the negative electrode 12. In the present embodiment, the positive electrode lead 20 is provided in the central portion in the longitudinal direction of the positive electrode 11, and at a position away from an end of the winding-start side and an end of the winding-finish side of the electrode assembly 14. Meanwhile, the negative electrode lead 21 is provided at one end portion in the longitudinal direction of the negative electrode 12 located on the winding-start side of the electrode assembly 14. The negative electrode 12 has a first core exposed portion 42 (see FIG. 2) corresponding to a portion from the negative electrode start end 12x to the non-opposing portion 43, and having no negative electrode mixture layer 41. The negative electrode lead 21 is joined to the core exposed portion 42.

The positive electrode 11 has a positive electrode core 30, and a positive electrode mixture layer 31 formed on at least one surface thereof. As the positive electrode core 30, it is possible to use, for example, foil of metal that is stable in the potential range of the positive electrode 11, such as aluminum or aluminum alloy, or a film having such a metal arranged as a surface layer. The positive electrode mixture layer 31 contains a positive electrode active material; a conductive agent, such as acetylene black; and a binder, such as polyvinylidene fluoride (PVdF), and is preferably formed on the opposite sides of the positive electrode core 30. The thickness of the positive electrode mixture layer 31 is greater than or equal to 40 µm and less than or equal to 100 µm, for example. As the positive electrode active material, lithium transition metal composite oxide containing Ni, Co, Mn, Al, and the like is used, for example. Note that the positive electrode lead 20 is preferably directly joined to the positive electrode core 30 by ultrasound welding, for example.

The negative electrode 12 has the negative electrode core 40, and the negative electrode mixture layer 41 formed on at least one surface thereof. As the negative electrode core 40, it is possible to use, for example, foil of metal that is stable in the potential range of the negative electrode 12, such as copper or copper alloy, or a film having such a metal arranged as a surface layer. The negative electrode mixture layer 41 contains a negative electrode active material, and a binder, such as styrene-butadiene rubber (SBR), and is preferably formed on the opposite sides of the negative electrode core 40. The thickness of the negative electrode mixture layer 41 is greater than or equal to 40 µm and less than or equal to 100 µm, for example. As the negative electrode active material, graphite or a Si-containing material is used, for example. The negative electrode lead 21 is preferably directly joined to the negative electrode core 40 by ultrasound welding, for example.

The cylindrical battery 10 comprises an upper insulating plate 18 arranged between the sealing assembly 17 and an electrode group, and having an opening portion for passing the positive electrode lead 20. In this specification, the electrode group means a portion including the positive electrode 11, the negative electrode 12, and the separator 13 of the electrode assembly 14, excluding the positive electrode lead 20 and the negative electrode lead 21. The cylindrical battery 10 comprises a lower insulating plate 19 arranged between the inner surface of the bottom of the outer can 16 and the electrode group, and having an opening portion for passing the negative electrode lead 21.

In the example illustrated in FIG. 1, the positive electrode lead 20 extends toward the sealing assembly 17 through the opening portion of the upper insulating plate 18, while the negative electrode lead 21 extends toward the bottom of the outer can 16 through the opening portion of the lower insulating plate 19. The positive electrode lead 20 is connected to the lower surface of a bottom plate 23 of the sealing assembly 17 by welding, for example, so that the sealing assembly 17 serves as a positive electrode terminal. The negative electrode lead 21 is connected to the inner surface of the bottom of the outer can 16 by welding, for example, so that the outer can 16 serves as a negative electrode terminal.

The outermost peripheral surface of the electrode assembly 14 has the negative electrode 12 arranged thereon, and is provided with a second core exposed portion 44 where the surface of the negative electrode core 40 is exposed. The core exposed portion 44 abuts the inner peripheral surface of the outer can 16. As the core exposed portion 44 abuts the inner peripheral surface of the outer can 16, which serves as the negative electrode terminal, opposite end portions in the longitudinal direction of the negative electrode 12 and the outer can 16 are electrically connected so that excellent current collectability can be secured. The core exposed portion 44 may be provided on a part of the outermost peripheral surface of the electrode assembly 14, but is preferably provided on the entire outermost peripheral surface. For example, there is provided a portion where the negative electrode mixture layer 41 is not provided on the opposite sides of the negative electrode core 40, over a length of greater than or equal to one turn of the electrode assembly 14 from the winding-finish end of the negative electrode 12.

The outer can 16 is a closed-bottomed cylindrical metal container. A gasket 28 is provided between the outer can 16 and the sealing assembly 17 so that the inside of the battery is hermetically sealed. For example, the outer can 16 has the grooved portion 22 that is formed by pressing the side surface portion of the outer can 16 from its outer side, and is adapted to support the sealing assembly 17. The grooved portion 22 is preferably formed in an annular shape along the circumferential direction of the outer can 16, and the upper surface of the grooved portion 22 supports the sealing assembly 17. In addition, the upper end portion of the outer can 16 is bent inward, and is swaged to the peripheral portion of the sealing assembly 17.

The sealing assembly 17 has a structure in which the bottom plate 23, a lower vent member 24, an insulating member 25, an upper vent member 26, and a cap 27 are stacked in this order from the side of the electrode assembly 14. Each member of the sealing assembly 17 has a disc shape or a ring shape, for example, and members other than the insulating member 25 are electrically connected together. The lower vent member 24 and the upper vent member 26 are connected together at their central portions, and the insulating member 25 is provided between their peripheral portions. With an increase in the internal pressure of the battery, the lower vent member 24 deforms such that it pushes the upper vent member 26 toward the cap 27, and then ruptures, thereby blocking a current path between the lower vent member 24 and the upper vent member 26. With a further increase in the internal pressure, the upper vent member 26 ruptures so that a gas is discharged through an opening portion of the cap 27.

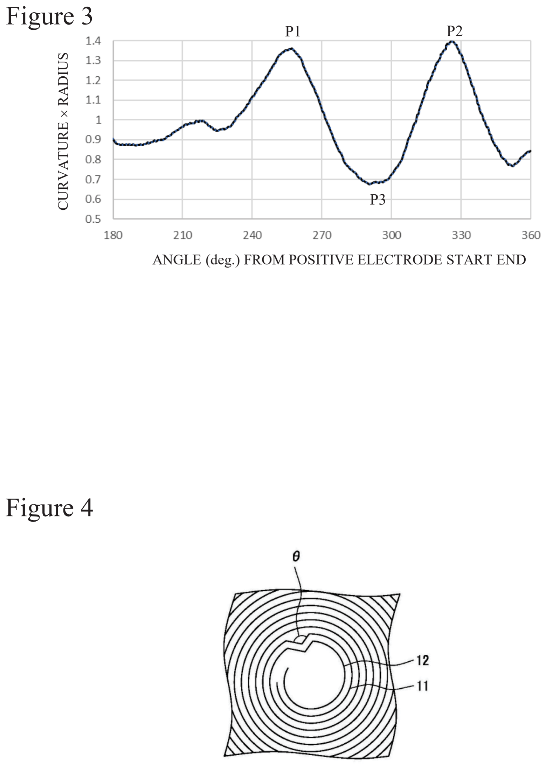

Hereinafter, the electrode assembly 14 will be described in detail with reference to FIGS. 2 and 3. FIG. 2 is a sectional view in the radial direction of the winding core of the electrode assembly 14 and its periphery. In FIG. 2, the separator 13 is not illustrated for the purpose of clarification of the drawing. FIG. 3 is a graph illustrating the relationship between the angle from a positive electrode start end 11x to a position in the direction of the winding-finish side with respect to the winding center Z and the curvature × the radius of the positive electrode 11.

As illustrated in FIG. 2, the negative electrode 12 of the electrode assembly 14 has, on the winding-start side of the electrode assembly 14, the non-opposing portion 43 that has the negative electrode mixture layer 41 formed on at least one surface of the negative electrode core 40, and is wound 0.75 turn or more without facing the positive electrode 11. The non-opposing portion 43, which has the negative electrode mixture layer 41 but does not face the positive electrode 11, does not contribute to charging or discharging of the battery. Meanwhile, the non-opposing portion 43 has high rigidity as it has the negative electrode mixture layer 41, and thus contributes to stabilizing the shape of the winding core portion of the electrode assembly 14, and secures an exhaust passage for a gas generated when an abnormality occurs to the battery. Note that a portion located closer to the winding-finish side of the electrode assembly 14 than the positive electrode start end 11x corresponds to each of the opposing portions of the positive and negative electrodes where the positive electrode 11 and the negative electrode 12 face each other with the separator 13 interposed therebetween.

In this specification, the positive electrode start end 11x means one end in the longitudinal direction of the positive electrode 11 located on the winding-start side (i.e., the winding core side) of the electrode assembly 14. Similarly, the negative electrode start end 12x means one end in the longitudinal direction of the negative electrode 12 located on the winding-start side of the electrode assembly 14. The negative electrode start end 12x is located closer to the winding center Z than is the positive electrode start end 11x.

In the non-opposing portion 43, the negative electrode mixture layer 41 may be formed on one of the inner peripheral surface of the negative electrode core 40, which faces the direction of the winding center Z, and the outer peripheral surface of the negative electrode core 40, which faces the direction of the sidewall of the outer can 16, but is preferably formed on both the inner peripheral surface and the outer peripheral surface. In such a case, the shape stability of the winding core portion further improves. The non-opposing portion 43 is preferably formed in a length of greater than or equal to 0.75 turn and less than or equal to 1.5 turn, for example, and more preferably, greater than or equal to 0.90 turn and less than or equal to 1.4 turn, and particularly preferably, greater than or equal to 1.0 turn and less than or equal to 1.3 turn. In such a case, an excellent exhaust passage can be easily secured in the winding core portion.

As described above, the negative electrode 12 has the core exposed portion 42 corresponding a portion from the negative electrode start end 12x to the non-opposing portion 43. The core exposed portion 42 is a portion not facing the positive electrode 11 as with the non-opposing portion 43, but is different from the non-opposing portion 43 in that it has no negative electrode mixture layer 41 and is formed of only the negative electrode core 40. In the present embodiment, the negative electrode lead 21 is joined to the core exposed portion 42. When the negative electrode lead 21 is arranged in the winding core portion of the electrode assembly 14, deformation is likely to occur at the opposing portions of the positive and negative electrodes during charging and discharging. However, according to the present embodiment, such deformation can be effectively suppressed.

The length of the core exposed portion 42 is not limited to a particular one, but is preferably greater than or equal to 0.5 turn from the perspective of securing the joint area of the negative electrode lead 21, for example. The core exposed portion 42 may be formed in a length of greater than or equal to 0.5 turn and less than or equal to 1.0 turn. The negative electrode lead 21 is a thin metal plate mainly composed of metal, such as nickel, for example, and has a thickness of greater than or equal to 50 µm and less than or equal to 100 µm. The negative electrode lead 21 is joined to the outer peripheral surface of the core exposed portion 42 at a position away from the negative electrode start end 12x and the non-opposing portion 43, for example.

As illustrated in FIGS. 2 and 3, the positive electrode 11 has a first maximum portion P1 and a second maximum portion P2, each having the maximum value of the curvature × the radius, at least in the innermost turn in the range of one turn from the positive electrode start end 11x to the winding-finish side.

The innermost turn of the positive electrode 11 has a shape such that it is curved to a large degree at the first maximum portion P1 and the second maximum portion P2, and the degree of curvature is small in a portion between the two maximum portions P1 and P2. A minimum portion P3 where the value of the curvature × the radius is the minimum in the innermost turn of the positive electrode 11 is formed at a position between the first maximum portion P1 and the second maximum portion P2. The positive electrode 11 may be formed such that it is curved more gently at the minimum portion P3 than at the other portions, or be formed linearly at the minimum portion P3. Herein, the radius at the maximum portion of the positive electrode 11 means the distance from the winding center Z to the positive electrode core 30 at the maximum portion (the same is true of the minimum portion).

In the present embodiment, introducing the two maximum portions P1 and P2 at specific positions of the positive electrode 11 can allow stress, which is generated during charging and discharging, to concentrate on a portion between the two maximum portions P1 and P2, for example, and thus can allow the direction in which the stress acts to face the outer side of the electrode assembly 14. That is, stress, which would cause deformation of the plate, is absorbed by the portion with low curvature. Accordingly, it is considered that buckling of the plate that is the inward bending of the plate can be effectively suppressed. Note that conventionally known electrode assemblies have a uniform degree of curvature of a plate, and include no maximum portion where the degree of curvature is locally large. In such a case, it would be impossible to control the place and the direction in which stress, which is generated during charging and discharging, concentrates.

The first maximum portion P1 and the second maximum portion P2 may be formed in the range of greater than or equal to 2 turns including the innermost turn of the positive electrode 11 so as to be arranged continuously along the radial direction of the electrode assembly 14, but are preferably formed only in the range of less than or equal to 1/2 of all turns of the positive electrode 11 from the innermost turn of the positive electrode 11. That is, the maximum portions are not formed on the outer side of a position corresponding to 1/2 of the radius of the electrode assembly 14. In particular, such a configuration is preferably adopted when the cylindrical battery 10 has a collector structure in which the core exposed portion 44 of the negative electrode 12 abuts the inner peripheral surface of the outer can 16. Each of the first maximum portion P1 and the second maximum portion P2 located on the outer side of the innermost turn of the positive electrode 11 is identified based on the value of the curvature × the radius of the positive electrode 11 in each turn.

When the first maximum portion P1 and the second maximum portion P2 are formed in the range of greater than or equal to 2 turns of the positive electrode 11, a maximum portion of the negative electrode 12 where the value of the curvature × the radius is the maximum may be formed in a region of the negative electrode 12 sandwiched between the maximum portions of the positive electrode 11 in the radial direction of the electrode assembly 14.

The first maximum portion P1 is located in the range of an angle θ1, which is the angle from the positive electrode start end 11x to a position in the direction of the winding-finish side with respect to the winding center Z of the electrode assembly 14, of greater than or equal to 180° and less than or equal to 280°. In this specification, the angle θ1 means the angle from a position where the positive electrode start end 11x overlaps the radial direction of the electrode assembly 14 to a position in the forward direction toward the winding-finish side of the electrode assembly 14 in each turn of the plate. Introducing only the first maximum portion P1 into the plate has a small effect of suppressing the deformation of the plate. Thus, the first maximum portion P1 needs to be introduced at the angle θ1 in the range of greater than or equal to 180° and less than or equal to 280°. As a result of examination, the inventors have found that the effect of suppressing the deformation of the plate is specifically increased when the angle θ1 is greater than or equal to 180° and less than or equal to 280°.

The angle θ1 indicates the position of the first maximum portion P1 with respect to the positive electrode start end 11x. When the first maximum portion P1 is formed in turns on the outer side of the innermost turn of the positive electrode 11, the angle θ1 is substantially the same in each turn of the positive electrode 11. That is, the first maximum portion P1 formed in each turn of the plate overlaps the radial direction of the electrode assembly 14. Similarly, each of the second maximum portion P2 and the minimum portion P3 is formed such that it overlaps the radial direction of the electrode assembly 14. The angle θ1 may be greater than or equal to 180° and less or equal to 280°, but is more preferably greater than or equal to 200° and less than or equal to 270°, and particularly preferably greater than or equal to 220° and less than or equal to 260°.

The second maximum portion P2 is located in the range of an angle θ2, which is the angle from the first maximum portion P1 to a position in the direction of the winding-finish side with respect to the winding center Z of the electrode assembly 14, of 80°±5°. When the two maximum portions P1 and P2 are formed with such an appropriate distance therebetween, deformation of the plate can be effectively suppressed. In other words, it would be difficult to sufficiently suppress the deformation of the plate when the distance between the two maximum portions P1 and P2 is too long or too close. The second maximum portion P2 may be formed at a position overlapping the positive electrode start end 11x in the radial direction of the electrode assembly 14, but is preferably formed at a position where the sum of the angle θ1 and the angle θ2 is less than 360°.

In the range of 1 turn of the positive electrode 11, the value of the curvature × the radius of the plate is the maximum at one of the first maximum portion P1 and the second maximum portion P2, and is the second maximum at the other of them. In the example illustrated in FIG. 3, the value of the curvature × the radius at the second maximum portion P2 is greater than the value of the curvature × the radius at the first maximum portion P1, but the value of the curvature × the radius at the second maximum portion P2 may be smaller. Note that it is also possible to provide a maximum portion where the value of the curvature × the radius is smaller than those at the maximum portions P1 and P2 in the range of less than 180° with respect to the winding center Z of the electrode assembly 14.

The value of the curvature × the radius at each of the maximum portions P1 and P2 is preferably greater than or equal to 1.2 and less than or equal to 2.0, and is more preferably greater than or equal to 1.2 and less than or equal to 1.6. In such a case, a greater effect of suppressing the deformation of the plate is obtained. The value of the curvature × the radius may be substantially constant along the radial direction of the electrode assembly 14, but may be smaller to some degree at positions of the maximum portions P1 and P2 on the radially outer side of the electrode assembly 14. The difference in the value of the curvature × the radius between the maximum portions P1 and P2 at positions with the same radius is preferably less than or equal to 0.2, and is more preferably less than or equal to 0.1.

The value of the curvature × the radius at the minimum portion P3 is preferably greater than or equal to 0.4 and less than or equal to 1.0, and is more preferably greater than or equal to 0.4 and less than or equal to 0.8. In such a case, a greater effect of suppressing the deformation of the plate is obtained. The value of the curvature × the radius may be substantially constant along the radial direction of the electrode assembly 14, but may be greater to some degree at positions of the maximum portions P1 and P2 on the radially outer side of the electrode assembly 14.

The electrode assembly 14 can be fabricated by winding plates using a winding core member with a cross-section in the shape of a non-perfect circle, for example. Examples of the winding core member include a winding core member with a shape such that the outer peripheral surface of a cylindrical shape is partially cut flat along the axial direction. That is, the contour of the cross-sectional shape of the winding core member includes an arc and a straight line connecting the opposite ends of the arc. Adjusting the position of the straight line portion of the winding core member with respect to the positive electrode start end 11x can set the angle θ1 to be in the range of greater than or equal to 180° and less than or equal to 280°. It is also possible to change the angles θ1 and θ2 and the value of the curvature × the radius by changing the length of the straight line portion of the winding core member or the tension (i.e., acceleration) during winding.

The value of the curvature × the radius of each plate can be determined from a CT image of the electrode assembly 14. Brightness information on the CT image is acquired, and a binarization process is performed on the data to extract the plate coordinates. The plate coordinates are extracted every 0.5°, and the curvature at each angle is calculated through differentiation. The moving average of the curvature in a section from a given angle to 30° in the direction of the winding-start side is determined as the curvature at the angle, and the value of the curvature at the angle × the radius is calculated. The CT image can be acquired using an X-ray CT system (SMX-225CT FPD HR manufactured by SHIMADZU CORPORATION).

### EXAMPLES

Hereinafter, the present disclosure will be further described by way of Examples, but the present disclosure is not limited thereto.

### <Example 1>

### [Fabrication of Positive Electrode]

As a positive electrode active material, lithium nickel oxide containing cobalt and aluminum (LiNi_{0.88}Co_{0.09}Al_{0.03}O₂) was used. A positive electrode mixture slurry was prepared by mixing the positive electrode active material, acetylene black, and polyvinylidene fluoride at a solid content mass ratio of 98:1:1, and by using N-methylpyrrolidone (NMP) as a dispersion medium. The slurry was applied to the opposite sides of a positive electrode core made of long aluminum foil with a thickness of 15 µm, and then, the coating was dried and compressed to obtain a positive electrode having a positive electrode mixture layer (the thickness on each side: 90 µm, and the density: 3.6 g/cm³) formed on the opposite sides of the positive electrode core. Note that the central portion in the longitudinal direction of the positive electrode was provided with a core exposed portion having no positive electrode mixture layer, and a positive electrode lead made of aluminum was ultrasonic-welded to the exposed portion.

### [Fabrication of Negative Electrode]

As a negative electrode active material, a mixed material containing graphite powder and a Si-containing material at a mass ratio of 95:5 was used. A negative electrode mixture slurry was prepared by mixing the negative electrode active material, dispersion of styrene butadiene rubber, and carboxymethylcellulose sodium at a solid content mass ratio of 98:1:1, and by using water as a dispersion medium. The slurry was applied to the opposite sides of a negative electrode core made of long copper foil with a thickness of 8 µm, and then, the coating was dried and compressed to obtain a negative electrode having a negative electrode mixture layer (the thickness on each side: 95 µm, and the density: 1.6 g/cm³) formed on the opposite sides of the negative electrode core. Note that regions of a predetermined length of the negative electrode from its opposite ends in the longitudinal direction were respectively provided with first and second core exposed portions having no negative electrode mixture layer, and a negative electrode lead made of nickel was ultrasonic-welded to the first core exposed portion.

### [Fabrication of Electrode Assembly]

A wound electrode assembly was obtained by spirally winding the foregoing positive electrode, the foregoing negative electrode, and a separator made of polyethylene using a winding core member described below, and attaching fixing tape to the opposite end portions in the axial direction of the outermost peripheral surface. At this time, the negative electrode was arranged to allow the first core exposed portion, which has the negative electrode lead joined thereto, of the negative electrode to be located on the winding-start side of the electrode assembly. That is, the second core exposed portion of the negative electrode is located on the winding-finish side of the electrode assembly. In addition, the negative electrode was caused to extend beyond the positive electrode start end on the winding-start side of the electrode assembly so that a non-opposing portion not facing the positive electrode was provided. After the wound structure of the electrode assembly was formed, the winding core member was removed to obtain a wound electrode assembly having a cavity formed in its winding core portion.

As the foregoing winding core member, a winding core member with a shape such that the outer peripheral surface of a cylindrical shape is partially cut flat along the axial direction was used. That is, the contour of the cross-sectional shape of the winding core member includes an arc and a straight line connecting the opposite ends of the arc. Note that provided that the length of the straight line portion of the winding core member is the same, it is possible to change the positions of the maximum portions and the minimum portion (i.e., the angles from the positive electrode start end with respect to the winding center) by changing the position of the straight line portion with respect to the positive electrode start end. It is also possible to change the value of the curvature × the radius of the positive electrode by changing the tension (i.e., acceleration) during winding.

In Example 1, the positive electrode and the negative electrode were spirally wound with the separator interposed therebetween so as to allow the angle θ1, which indicates the position of the first maximum portion P1, to be 280°. The second maximum portion P2 is present at an angle (i.e., angles θ1+θ2) of 360° from the positive electrode start end, and the minimum portion P3 is present at an angle (i.e., an angle θ3) of 320° from the positive electrode start end. The first maximum portion P1, the second maximum portion P2, and the minimum portion P3 are formed continuously in the positive electrode and the negative electrode in the range of 1/2 of turns from the non-opposing portion. The values of the curvatures × the radii at the first maximum portion P1, the second maximum portion P2, and the minimum portion P3 were respectively set to 1.4, 1.4, and 0.8.

### [Preparation of Non-Aqueous Electrolytic Solution]

A non-aqueous electrolytic solution was prepared by adding 5 parts by mass of vinylene carbonate (VC) into 100 parts by mass of a mixed solvent containing a mixture of ethylene carbonate (EC) and dimethyl carbonate (DMC) at a volume ratio of 1:3 (25°C), and then dissolving 1.5 mol/liter of LiPF₆ therein.

### [Fabrication of Cylindrical Battery]

Insulating plates were arranged above and below the foregoing electrode assembly, and then, a negative electrode lead was welded to the inner surface of the bottom of a closed-bottomed cylindrical outer can. Then, a positive electrode lead was welded to an internal terminal board of a sealing assembly, and the electrode assembly was housed within the outer can. After that, a non-aqueous electrolytic solution was injected into the outer can using a decompression method, and then, an opening portion of the outer can was sealed with the sealing assembly via a gasket so that a cylindrical battery was obtained. Note that a second core exposed portion of the negative electrode forms the outermost peripheral surface of the electrode assembly, and is in contact with the inner peripheral surface of the outer can.

### <Example 2>

A cylindrical battery was fabricated in a manner similar to Example 1 except a point that, during the fabrication of the electrode assembly, the position of the straight line portion of the winding core member with respect to the positive electrode start end was changed, and the positive electrode and the negative electrode were spirally wound with the separator interposed therebetween so as to allow the angle θ1 to be 250°.

### <Example 3>

A cylindrical battery was fabricated in a manner similar to Example 1 except a point that, during the fabrication of the electrode assembly, the position of the straight line portion of the winding core member with respect to the positive electrode start end was changed, and the positive electrode and the negative electrode were spirally wound with the separator interposed therebetween so as to allow the angle θ1 to be 180°.

### <Example 4>

A cylindrical battery was fabricated in a manner similar to Example 1 except a point that, during the fabrication of the electrode assembly, the acceleration (i.e., tension) during the winding of the electrodes was changed, and the values of the curvatures × the radii at the maximum portions and the minimum portion were set to the values shown in Table 1.

### <Example 5>

A cylindrical battery was fabricated in a manner similar to Example 4 except a point that, during the fabrication of the electrode assembly, the position of the straight line portion of the winding core member with respect to the positive electrode start end was changed, and the positive electrode and the negative electrode were spirally wound with the separator interposed therebetween so as to allow the angle θ1 to be 250°.

### <Example 6>

A cylindrical battery was fabricated in a manner similar to Example 4 except a point that, during the fabrication of the electrode assembly, the position of the straight line portion of the winding core member with respect to the positive electrode start end was changed, and the positive electrode and the negative electrode were spirally wound with the separator interposed therebetween so as to allow the angle θ1 to be 180°.

### <Comparative Example 1>

A cylindrical battery was fabricated in a manner similar to Example 1 except a point that an electrode assembly was fabricated using a cylindrical winding core member with a cross-section in the shape of a perfect circle. The electrode assembly of Comparative Example 1 does not have formed therein maximum portions or a minimum portion like those of the electrode assembly of Example 1.

### <Comparative Example 2>

A cylindrical battery was fabricated in a manner similar to Example 1 except a point that, during the fabrication of the electrode assembly, the position of the straight line portion of the winding core member with respect to the positive electrode start end was changed, and the positive electrode and the negative electrode were spirally wound with the separator interposed therebetween so as to allow the angle θ1 to be 170°.

### <Comparative Example 3>

A cylindrical battery was fabricated in a manner similar to Example 1 except a point that, during the fabrication of the electrode assembly, the position of the straight line portion of the winding core member with respect to the positive electrode start end was changed, and the positive electrode and the negative electrode were spirally wound with the separator interposed therebetween so as to allow the angle θ1 to be 100°.

### <Comparative Example 4>

A cylindrical battery was fabricated in a manner similar to Example 1 except a point that, during the fabrication of the electrode assembly, the position of the straight line portion of the winding core member with respect to the positive electrode start end was changed, and the positive electrode and the negative electrode were spirally wound with the separator interposed therebetween so as to allow the angle θ1 to be 10°.

### [Evaluation of Deformation of Plate (i.e., Presence or Absence of Buckling)]

Each of the batteries of the Examples and the Comparative Examples was charged under a temperature environment of 45°C and with a constant current of 0.5 C until a battery voltage of 4.2 V was reached. After that, each battery was discharged with a constant current of 0.7 C until a battery voltage of 2.5 V was reached. After 200 cycles of such charging and discharging, the battery was set to the charged state, and then, a region around the winding core of the electrode assembly was observed with an X-ray CT system (SMX-225CT FPD HR manufactured by SHIMADZU CORPORATION).

As shown in FIG. 4, regarding the opposing portions of the positive electrode and the negative electrode, the presence or absence of buckling was evaluated by determining that buckling is present when deformation (i.e., buckling) with an angle θ of less than or equal to 150° is confirmed in a plate (i.e., at least one of the positive electrode 11 and the negative electrode 12). Evaluation was performed for 100 batteries.

**[Table 1]**

| | First Maximum Portion | | Minimum Portion | | Second Maximum Portion | | The Number of Times of Buckling |
|---|---|---|---|---|---|---|---|
| | Curvature × Radius | *θ* 1 (deg.) | Curvature × Radius | *θ* 3 (deg.) | Curvature × Radius | θ1 - θ2 (deg.) | |
| Example 1 | 1.4 | 280 | 0.8 | 320 | 1.4 | 360 | 5/100 |
| Example 2 | | 250 | | 290 | | 330 | 0/100 |
| Example 3 | | 180 | | 220 | | 260 | 4/100 |
| Example 4 | 1.2 | 280 | 1.0 | 320 | 1.2 | 360 | 8/100 |
| Example 5 | | 250 | | 290 | | 330 | 3/100 |
| Example 6 | | 180 | | 220 | | 260 | 7/100 |
| Comparative Example 1 | 1.0 | - | 1.0 | - | 1.0 | - | 20/100 |
| Comparative Example 2 | 1.4 | 170 | 0.8 | 210 | 1.4 | 250 | 12/100 |
| Comparative Example 3 | | 100 | | 140 | | 180 | 17/100 |
| Comparative Example 4 | | 10 | | 330 | | 290 | 11/100 |

As shown in Table 1, regarding each of the batteries of the Examples, buckling of the electrode assembly is less likely to occur in comparison with the batteries of the Comparative Examples. That is, according to the electrode assembly formed by introducing the first and second maximum portions in the range of predetermined angles from the positive electrode start end, it is possible to effectively suppress deformation at the opposing portions of the positive electrode and the negative electrode. Note that even when the electrode assembly includes the first and second maximum portions, it would be difficult to sufficiently suppress the deformation of the electrode assembly if the positions of the first and second maximum portions are outside an appropriate range (see Comparative Examples 2 to 4).

The present disclosure will be further described by way of the following embodiments.

Configuration 1: A cylindrical battery, comprising an electrode assembly, the electrode assembly having a positive electrode, a negative electrode including a core and a mixture layer, and a separator, the electrode assembly being formed by winding the positive electrode and the negative electrode with the separator interposed between the positive electrode and the negative electrode, in which the negative electrode has, on a winding-start side of the electrode assembly, a non-opposing portion that has the mixture layer formed on at least one surface of the core, and is wound 0.75 turn or more without facing the positive electrode, the positive electrode has, in at least an innermost turn, first and second maximum portions each having a maximum value of a curvature × a radius, the first maximum portion is located in a range of an angle θ1 of greater than or equal to 180° and less than or equal to 280°, the angle θ1 being an angle from a positive electrode start end to a position in a direction of a winding-finish side with respect to a winding center of the electrode assembly, the second maximum portion is located in a range of an angle θ2 of 80°±5°, the angle θ2 being an angle from the first maximum portion to a position in the direction of the winding-finish side with respect to the winding center of the electrode assembly, and the value of the curvature × the radius is maximum at one of the first and second maximum portions, and is second maximum at another of the first and second maximum portions.

Configuration 2: The cylindrical battery according to Configuration 1, in which the value of the curvature × the radius at each of the first and second maximum portions is greater than or equal to 1.2 and less than or equal to 2.0.

Configuration 3: The cylindrical battery according to Configuration 1 or 2, in which the value of the curvature × the radius is greater than or equal to 0.4 and less than or equal to 1.0 at a minimum portion where the value of the curvature × the radius is minimum in a region between the first and second maximum portions.

Configuration 4: The cylindrical battery according to any one of Configurations 1 to 3, in which the first and second maximum portions are formed in a range of greater than or equal to 2 turns including the innermost turn of the positive electrode so as to be arranged continuously along a radial direction of the electrode assembly.

Configuration 5: The cylindrical battery according to Configuration 4, in which the first and second maximum portions are formed only in a range of less than or equal to 1/2 of all turns of the positive electrode from the innermost turn of the positive electrode.

Configuration 6: The cylindrical battery according to any one of Configurations 1 to 5, in which the electrode assembly has a negative electrode lead, and the negative electrode lead is joined to a core exposed portion, the core exposed portion being a portion from a negative electrode start end to the non-opposing portion, and having no mixture layer.

### REFERENCE SIGNS LIST

10 Cylindrical battery, 11 Positive electrode, 11x Positive electrode start end, 12 Negative electrode, 12x Negative electrode start end, 13 Separator, 14 Electrode assembly, 16 Outer can, 17 Sealing assembly, 18 Upper insulating plate, 19 Lower insulating plate, 20 Positive electrode lead, 21 Negative electrode lead, 22 Grooved portion, 23 Bottom plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 42, 44 Core exposed portion, 43 Non-opposing portion, P1 First maximum portion, P2 Second maximum portion, P3 Minimum portion

## Claims

1. A cylindrical battery, comprising:
an electrode assembly, the electrode assembly having a positive electrode, a negative electrode including a core and a mixture layer, and a separator, the electrode assembly being formed by winding the positive electrode and the negative electrode with the separator interposed between the positive electrode and the negative electrode, wherein
the negative electrode has, on a winding-start side of the electrode assembly, a non-opposing portion that has the mixture layer formed on at least one surface of the core, and is wound 0.75 turn or more without facing the positive electrode,
the positive electrode has, in at least an innermost turn, first and second maximum portions each having a maximum value of a curvature × a radius,
the first maximum portion is located in a range of an angle θ1 of greater than or equal to 180° and less than or equal to 280°, the angle θ1 being an angle from a positive electrode start end to a position in a direction of a winding-finish side with respect to a winding center of the electrode assembly,
the second maximum portion is located in a range of an angle θ2 of 80°±5°, the angle θ2 being an angle from the first maximum portion to a position in the direction of the winding-finish side with respect to the winding center of the electrode assembly, and
in the innermost turn of the positive electrode, the value of the curvature × the radius is maximum at one of the first and second maximum portions, and is second maximum at another of the first and second maximum portions.

2. The cylindrical battery according to claim 1, wherein the value of the curvature × the radius at each of the first and second maximum portions is greater than or equal to 1.2 and less than or equal to 2.0.

3. The cylindrical battery according to claim 1, wherein the value of the curvature × the radius is greater than or equal to 0.4 and less than or equal to 1.0 at a minimum portion where the value of the curvature × the radius is minimum in a region between the first and second maximum portions.

4. The cylindrical battery according to claim 1, wherein the first and second maximum portions are formed in a range of greater than or equal to 2 turns including the innermost turn of the positive electrode so as to be arranged continuously along a radial direction of the electrode assembly.

5. The cylindrical battery according to claim 4, wherein the first and second maximum portions are formed only in a range of less than or equal to 1/2 of all turns of the positive electrode from the innermost turn of the positive electrode.

6. The cylindrical battery according to any one of claims 1 to 5, wherein
the electrode assembly has a negative electrode lead, and
the negative electrode lead is joined to a core exposed portion, the core exposed portion being a portion from a negative electrode start end to the non-opposing portion, and having no mixture layer.
